# EUROPEAN PATENT APPLICATION

(11) **EP 4 435 663 A1**
(43) Date of publication of application: **25.09.2024**
(21) Application number: 23191933.3
(22) Date of filing: 17.08.2023
(51) Int. Cl.: G06F 40/106, G06F 3/04817, G06F 40/169, G06Q 10/10

(54) **INFORMATION PROCESSING SYSTEM, INFORMATION PROCESSING PROGRAM, AND INFORMATION PROCESSING METHOD**

(30) Priority: 20.03.2023 JP 2023044040
(71) Applicant: FUJIFILM Business Innovation Corp., Minato-ku Tokyo (JP)
(72) Inventor: MORITA, Toru, Yokohama-shi, Kanagawa (JP)
(74) Representative: Kurig, Thomas

(57) **Abstract**

An information processing system includes: one or a plurality of processors, in which the processor is configured to: perform control to display a comment input region that receives an input of a comment for a document indicated by a document file in a state where the document file is not opened; receive a designation of a display position of the comment for an image representing the document file on the basis of information which is input to the comment input region; and perform control to display the comment at the designated display position of the image representing the document file.

## Description

### BACKGROUND OF THE INVENTION

### (i) Field of the Invention

The present disclosure relates to an information processing system, an information processing program, and an information processing method.

### (ii) Description of Related Art

In the related art, there have been the following techniques as techniques for providing comments to documents.

JP2017-181790A discloses a method having an object to provide a single user interface for contacting a co-worker, generating work products (files, media, documents, content items, and the like), and accessing a software application.

The method includes: causing an online content management system to generate a workspace backed by a shared folder that provides a centralized environment for manipulating content items in the shared folder and communicating with authorized users of the shared folder; causing the online content management system to acquire the content items which are contents for the content items and the comments relating to the content items and which includes the comments in the content items; storing the content items in an online shared folder managed by the content management system; and causing the content management system to present the comment in a message stream in a workspace graphical user interface representing a workspace backed by the shared folder.

### SUMMARY OF THE INVENTION

Meanwhile, in a case where a comment is input without opening a document, in order for a viewer of the comment to recognize which part of the document the comment is intended for, it is necessary to proposedly mention the part in the comment. Alternatively, it may be understood that the comment is for a specific part of the document without making the reference. In many cases, such prerequisite knowledge that the viewer of the comment understands the content described in the document to some extent is necessary. For example, in a case of a comment "Please correct the amount of money", it is not possible to know which part is mentioned without the above-mentioned prerequisite knowledge.

An object of the present disclosure is to provide an information processing system, an information processing program, and an information processing method capable of displaying a comment at the corresponding part without proposedly referring to the corresponding part in the comment, in a case where the comment for the document is input without opening the document.

In order to achieve the above-mentioned object, according to a first aspect of the present disclosure, there is provided an information processing system comprising: one or a plurality of processors, wherein the processor is configured to: perform control to display a comment input region that receives an input of a comment for a document indicated by a document file in a state where the document file is not opened; receive a designation of a display position of the comment for an image representing the document file on the basis of information which is input to the comment input region; and perform control to display the comment at the designated display position of the image representing the document file.

Further, according to a second aspect, in the information processing system according to the first aspect, the input information may be specific text information for designating the display position.

Further, according to a third aspect, in the information processing system according to the first aspect, the image representing the document file may be a thumbnail image.

Further, according to a fourth aspect, in the information processing system according to the third aspect, the processor may be configured to: perform control to display the document in an enlarged manner in a case where the thumbnail image is selected and designated and simultaneously perform control to display the comment at the display position of the document.

Further, according to a fifth aspect, in the information processing system according to the fourth aspect, the processor may be configured to: perform control to display the comment on the thumbnail image along only a position in a vertical direction of the display position; and perform control to display the comment on the document, which is displayed in the enlarged manner, in accordance with both positions in the vertical direction and a horizontal direction of the display position.

Further, according to a sixth aspect, in the information processing system according to any one of the first to fifth aspect, the processor may be configured to: further receive designation of a display mode of the comment; and perform control to display the comment in the received display mode.

Further, according to a seventh aspect, in the information processing system according to any one of the first to sixth aspects, the processor may be configured to: perform control to display a plurality of the comment input regions; and receive a position corresponding to a position where the comment input region in which the comment is input is displayed, as the display position.

Further, according to an eighth aspect, in the information processing system according to any one of the first to seventh aspects, the processor may be configured to: further perform control to display a position designation screen that receives the designation of the display position for a region corresponding to a predetermined text string of the document in a case where the text string is input to the comment input region; and receive the designation of the display position via the position designation screen.

Further, according to a ninth aspect, in the information processing system according to the eighth aspect, the processor may be configured to: receive an input of the text string on the position designation screen; and receive a position of the text string, for which input is received, as the display position in a case where the document file includes the text string.

Moreover, in order to achieve the above-mentioned object, according to a tenth aspect, there is provided an information processing program that causes a computer to execute processing of: performing control to display a comment input region that receives an input of a comment for a document indicated by a document file in a state where the document file is not opened; receiving a designation of a display position of the comment for an image representing the document file on the basis of information which is input to the comment input region; and performing control to display the comment at the designated display position of the image representing the document file.

Further, in order to achieve the above object, according to a eleventh aspect, there is provided an information processing method comprising: performing control to display a comment input region that receives an input of a comment for a document indicated by a document file in a state where the document file is not opened; receiving a designation of a display position of the comment for an image representing the document file on the basis of information which is input to the comment input region; and performing control to display the comment at the designated display position of the image representing the document file.

In the first aspect, the tenth aspect, and the eleventh aspect, in a case where the comment for the document is input without opening the document, the comment can be displayed at the corresponding part without proposedly referring to the corresponding part in the comment.

In the second aspect, by inputting the specific text information, the comment can be displayed at a position indicated by the text information.

In the third aspect, the comment can be displayed at a designated position without displaying the document itself.

In the fourth aspect, the comment can be displayed at the designated position on the document displayed in an enlarged manner.

In the fifth aspect, precision of the display position can be changed in accordance with the size of the displayed image.

In the sixth aspect, the display mode of the comment can be designated.

In the seventh aspect, on the basis of the position at which the comment is input, the display position of the comment can be designated.

In the eighth aspect, the display position of the corresponding comment can be designated by the predetermined text string.

In the ninth aspect, the display position of the corresponding comment can be designated by the input text string.

### BRIEF DESCRIPTION OF THE DRAWINGS

Exemplary embodiment(s) of the present invention will be described in detail based on the following figures, wherein:
Fig. 1 is a block diagram showing an example of a configuration of an information processing system according to an exemplary embodiment of the present disclosure;
Fig. 2 is a block diagram showing an example of a hardware configuration of a server according to the exemplary embodiment of the present disclosure;
Fig. 3 is a block diagram showing an example of a hardware configuration of a terminal apparatus according to the exemplary embodiment of the present disclosure;
Fig. 4 is a block diagram showing an example of a functional configuration of the terminal apparatus according to the exemplary embodiment of the present disclosure;
Fig. 5 is a schematic diagram showing an example of a configuration of a forwarding information database according to the exemplary embodiment of the present disclosure;
Fig. 6 is a schematic diagram showing an example of a configuration of a history information database according to the exemplary embodiment of the present disclosure;
Fig. 7 is a flowchart showing an example of first information processing according to the exemplary embodiment of the present disclosure;
Fig. 8 is a front view showing an example of a workspace display screen at the time of inputting a forwarding comment according to the exemplary embodiment of the present disclosure;
Fig. 9 is a front view showing an example of a workspace display screen at the time of inputting a forwarding comment according to the exemplary embodiment of the present disclosure;
Fig. 10 is a front view showing an example of a workspace display screen at the time of inputting a forwarding comment according to the exemplary embodiment of the present disclosure;
Fig. 11 is a front view showing an example of a workspace display screen at the time of inputting a forwarding comment according to the exemplary embodiment of the present disclosure;
Fig. 12 is a front view showing an example of a workspace display screen at the time of inputting a forwarding comment according to the exemplary embodiment of the present disclosure;
Fig. 13 is a flowchart showing an example of second information processing according to the exemplary embodiment of the present disclosure;
Fig. 14 is a front view showing an example of a workspace display screen at a time of displaying a forwarding comment according to the exemplary embodiment of the present disclosure;
Fig. 15 is a front view showing an example of a workspace display screen at a time of displaying a forwarding comment according to the exemplary embodiment of the present disclosure;
Fig. 16 is a schematic diagram showing an example of a method of generating a thumbnail image of a document file according to the exemplary embodiment of the present disclosure;
Fig. 17 is a schematic diagram showing an example of a custom attribute according to the exemplary embodiment of the present disclosure;
Fig. 18 is a schematic diagram showing an example of metadata according to the exemplary embodiment of the present disclosure;
Fig. 19 is a schematic diagram showing an example of a state in which a post-it annotation is added to the document according to the exemplary embodiment of the present disclosure;
Fig. 20 is a flowchart showing an example of a forwarding information transmission processing according to the exemplary embodiment of the present disclosure;
Fig. 21 is a schematic diagram showing an example of a usage status of the information processing system according to the exemplary embodiment of the present disclosure;
Fig. 22 is a schematic diagram provided for explaining a modification example of the exemplary embodiment of the present disclosure;
Fig. 23 is a schematic diagram provided for explaining a modification example of the exemplary embodiment of the present disclosure;
Fig. 24 is a schematic diagram for describing a modification example of the exemplary embodiment of the present disclosure;
Fig. 25 is a schematic diagram for describing a modification example of the exemplary embodiment of the present disclosure;
Fig. 26 is a schematic diagram for describing a modification example of the exemplary embodiment of the present disclosure;
Fig. 27 is a schematic diagram for describing a modification example of the exemplary embodiment of the present disclosure;
Fig. 28 is a schematic diagram provided for explaining a modification example of the exemplary embodiment of the present disclosure; and
Fig. 29 is a schematic diagram provided for explaining a modification example of the exemplary embodiment of the present disclosure.

### DETAILED DESCRIPTION OF THE INVENTION

Hereinafter, an exemplary embodiment of the present disclosure will be described in detail with reference to the drawings. In addition, description will be given of a case where the technique of the present disclosure is applied to an information processing system that provides a workspace in which a plurality of users is able to mutually transmit forwarding comments via a cloud.

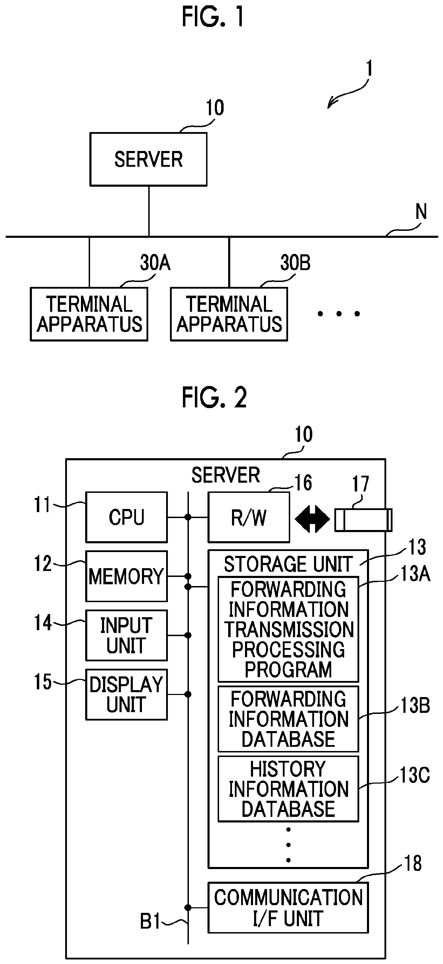

First, a configuration of an information processing system 1 according to the present exemplary embodiment will be described with reference to Fig. 1. Fig. 1 is a block diagram showing an example of the configuration of the information processing system 1 according to the present exemplary embodiment.

As shown in Fig. 1, the information processing system 1 according to the present exemplary embodiment includes a server 10 which is provided on the cloud and a plurality of terminal apparatuses 30A, 30B, .... In addition, hereinafter, in a case in which the terminal apparatuses 30A, 30B, ... are described without being distinguished from each other, the terminal apparatuses 30A, 30B, ... are simply generically referred to as "terminal apparatus 30".

The server 10 according to the present exemplary embodiment has a central function for providing the workspace, and the terminal apparatus 30 according to the present exemplary embodiment is used by each of the plurality of users described above. Examples of the server 10 and the terminal apparatus 30 include information processing apparatuses such as a personal computer and a server computer.

The server 10 and the terminal apparatus 30 are connected to each other via the network N, and the server 10 is able to communicate with each other via the terminal apparatus 30 and the network N.

In addition, in the present exemplary embodiment, a combination of a public communication line, such as the Internet or a telephone network, and a communication line in a company, such as a local region network (LAN) or a wide region network (WAN), is applied as the network N. The present disclosure is not limited to this aspect. For example, only one of the public communication line and the communication line in the company may be applied as the network N. Further, in the present exemplary embodiment, wired and wireless communication lines are applied as the network N. However, the present disclosure is not limited to this aspect, and only one of the wireless communication line and the wired communication line may be applied.

Next, the configuration of the server 10 according to the present exemplary embodiment will be described with reference to Fig. 2. Fig. 2 is a block diagram showing an example of a hardware configuration of the server 10 according to the present exemplary embodiment.

As shown in Fig. 2, the server 10 according to the present exemplary embodiment includes a central processing unit (CPU) 11 as a processor, a memory 12 as a temporary storage region, a non-volatile storage unit 13, an input unit 14, such as a keyboard and a mouse, a display unit 15, such as a liquid crystal display, a medium reading writing device (R/W) 16, and a communication interface (I/F) unit 18. The CPU 11, the memory 12, the storage unit 13, the input unit 14, the display unit 15, the medium reading writing device 16, and the communication I/F unit 18 are connected to each other via a bus B1. The medium reading writing device 16 reads information written on a recording medium 17 and writes information on the recording medium 17.

The storage unit 13 according to the present exemplary embodiment is realized by a hard disk drive (HDD), a solid state drive (SSD), a flash memory, or the like. The storage unit 13 as a storage medium stores a forwarding information transmission processing program 13A. The forwarding information transmission processing program 13A is stored (installed) in the storage unit 13 in a manner that the recording medium 17 in which the forwarding information transmission processing program 13A has been written is connected to the medium reading writing device 16, and the medium reading writing device 16 reads the forwarding information transmission processing program 13A from the recording medium 17. The CPU 11 appropriately reads the forwarding information transmission processing program 13A from the storage unit 13, expands the program into the memory 12, and sequentially executes processes of the forwarding information transmission processing program 13A.

Further, the storage unit 13 stores a forwarding information database 13B and a history information database 13C. Further, these databases will be described in detail below.

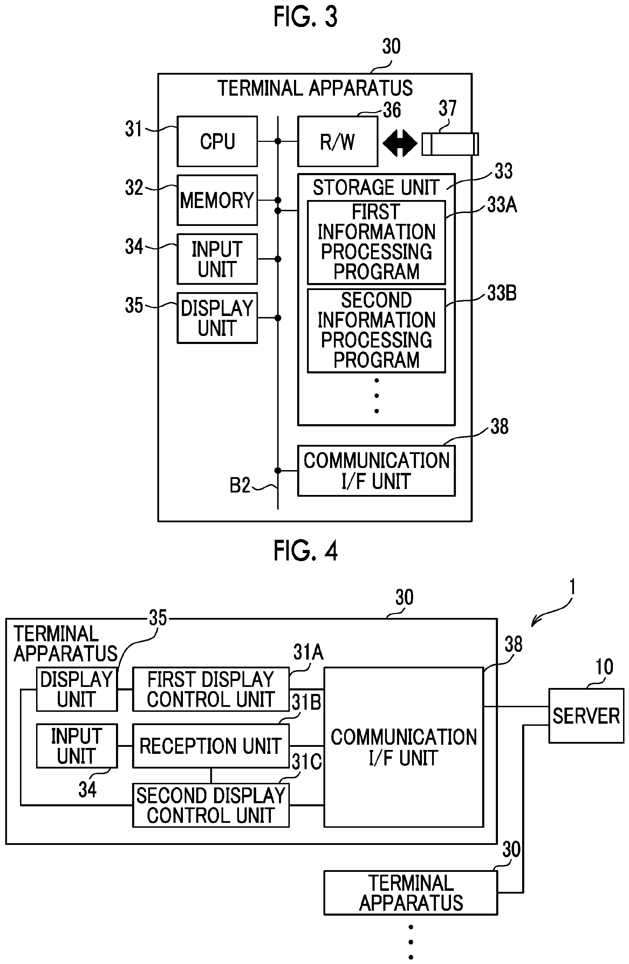

Next, a configuration of the terminal apparatus 30 according to the present exemplary embodiment will be described with reference to Fig. 3. Fig. 3 is a block diagram showing an example of a hardware configuration of terminal apparatus 30 according to the present exemplary embodiment.

As shown in Fig. 3, the terminal apparatus 30 according to the present exemplary embodiment includes a CPU 31 as a processor, a memory 32 as a temporary storage region, a non-volatile storage unit 33, an input unit 34, such as a keyboard and a mouse, a display unit 35, such as a liquid crystal display, a medium reading writing device (R/W) 36, and a communication I/F unit 38. The CPU 31, the memory 32, the storage unit 33, the input unit 34, the display unit 35, the medium reading writing device 36, and the communication I/F unit 38 are connected to each other via a bus B2. The medium reading writing device 36 reads information written on a recording medium 37 and writes information on the recording medium 37.

The storage unit 33 according to the present exemplary embodiment is implemented by, for example, an HDD, an SSD, or a flash memory. The storage unit 33 as a storage medium stores a first information processing program 33A and a second information processing program 33B. Regarding each program of the first information processing program 33A and the second information processing program 33B, the recording medium 37 on which each program has been written is connected to the medium reading writing device 36, and the medium reading writing device 36 reads each of the programs from the recording medium 37. Then, each of the programs is stored (installed) in the storage unit 33. The CPU 31 appropriately reads each of the first information processing program 33A and the second information processing program 33B from the storage unit 33, expands the programs in the memory 32, and sequentially executes processes included in each of the programs.

Next, referring to Fig. 4, description will be given of a functional configuration of the terminal apparatus 30 according to the present exemplary embodiment. Fig. 4 is a block diagram showing an example of the functional configuration of the terminal apparatus 30 according to the present exemplary embodiment.

As shown in Fig. 4, the terminal apparatus 30 according to the present exemplary embodiment includes a first display control unit 31A, a reception unit 31B, and a second display control unit 31C. The CPU 31 of the terminal apparatus 30 executes the first information processing program 33A and the second information processing program 33B to function as the first display control unit 31A, the reception unit 31B, and the second display control unit 31C.

The first display control unit 31A according to the present exemplary embodiment controls the display unit 35 such that the display unit 35 displays a comment input region for receiving an input of a comment (hereinafter, referred to as a "forwarding comment") for a document indicated by the document file in a state where the document file is not opened. Further, the reception unit 31B according to the present exemplary embodiment receives the designation of the display position of the forwarding comment for the image representing the document file, on the basis of the information which is input by the user to the comment input region via the input unit 34. Then, the second display control unit 31C according to the present exemplary embodiment controls the display unit 35 such that the display unit 35 displays the forwarding comment at the designated display position of the image representing the document file. Here, the forwarding comment does not directly change the content of the document, but is added to the document for the purpose of calling attention to a user who browses the document, and is different from an operation such as editing accompanied with change in the content of the document. For example, with the content of the document maintained in a case where another person browses the document after completing the document, in a case where the part to be carefully browsed is mentioned or the edited content of the document is proposed during the creation of the document, the forwarding comment is input. However, the use of the forwarding comment is not limited to such a case.

Normally, the display unit 35, which is the display target of the first display control unit 31A, and the display unit 35, which is the display target of the second display control unit 31C, are different display units 35 of the terminal apparatus 30. The comment input region, which is displayed by the first display control unit 31A, receives an input of a forwarding comment from a certain user to a different user, and the different user refers to the forwarding comment targeted to be displayed by the second display control unit 31C.

However, the present invention is not limited to this aspect. In a case where the user who inputs the forwarding comment refers to the forwarding comment, for example, the display unit 35, which is targeted to be displayed by the first display control unit 31A, and the display unit 35, which is targeted to be displayed by the second display control unit 31C, are regarded as the display units 35 of the common terminal apparatus 30.

Further, in the present exemplary embodiment, a thumbnail image is applied as an image representing the document file. However, the present disclosure is not limited to this aspect, and for example, an unreduced image indicated by the document file itself may be applied as an image representing the document file.

Further, the second display control unit 31C according to the present exemplary embodiment controls the display unit 35 such that the display unit 35 displays the document in an enlarged manner in a case where the displayed thumbnail image is selected and designated, and simultaneously controls the display unit 35 such that the display unit 35 displays the forwarding comment at the display position of the document.

In particular, the second display control unit 31C according to the present exemplary embodiment controls the display unit 35 such that the display unit 35 displays the forwarding comment on the thumbnail image only in accordance with the position in the vertical direction in the display position. Further, the second display control unit 31C according to the present exemplary embodiment controls the display unit 35 such that the display unit 35 displays the forwarding comment in accordance with both positions in the vertical direction and the horizontal direction in the display position on the document displayed in an enlarged manner.

Further, the reception unit 31B according to the present exemplary embodiment further receives the designation of the display mode of the forwarding comment via the input unit 34, and the second display control unit 31C according to the present exemplary embodiment controls the display unit 35 such that the display unit 35 displays the forwarding comment in the received display mode.

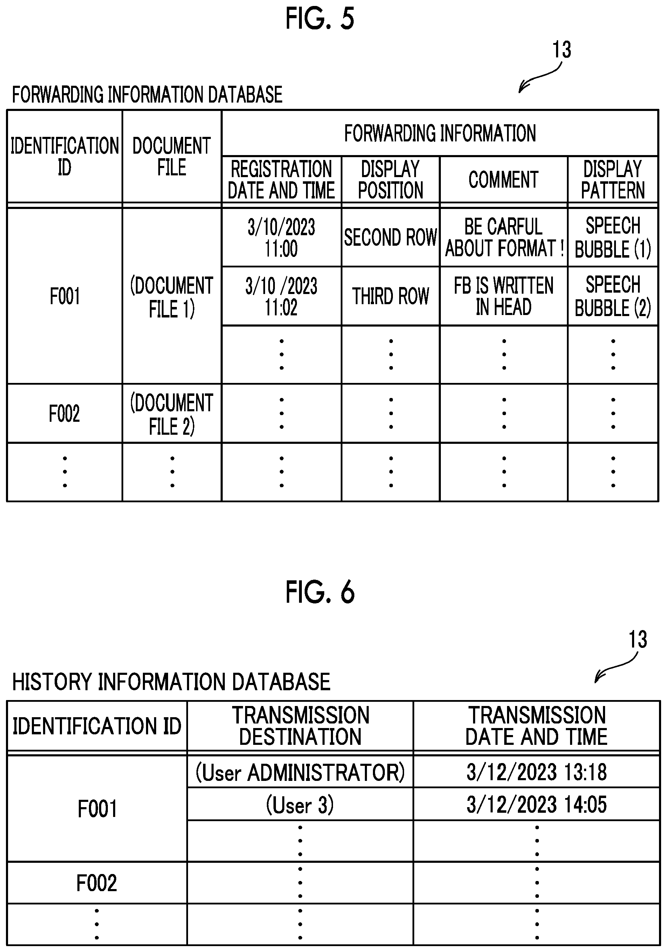

Next, the forwarding information database 13B according to the present exemplary embodiment will be described with reference to Fig. 5. Fig. 5 is a schematic diagram showing an example of the configuration of the forwarding information database 13B according to the present exemplary embodiment.

The forwarding information database 13B according to the present exemplary embodiment is a database in which information about the above-mentioned forwarding comment is registered. As shown in Fig. 5 as an example, the forwarding information database 13B according to the present exemplary embodiment is stored in association with the respective pieces of the information of the identification ID, the document file, and the forwarding information.

The identification ID is information that is allocated in advance as different information for each of the document files in order to individually identify the document files managed by the information processing system 1, and the document file is information representing the document file itself. As described above, in the present exemplary embodiment, the document file itself is registered as the information representing the document file to be registered in the forwarding information database 13B, but the present disclosure is not limited thereto. For example, a uniform resource locator (URL) indicating a storage destination of the document file may be applied as the information representing the document file.

Further, the above-mentioned forwarding information is information about the forwarding comment added to the document indicated by the corresponding document file, and includes a registration date and time, a display position, a comment, and a display pattern, as shown in Fig. 5. Here, the registration date and time is information representing a date and time in which the corresponding forwarding comment is registered in the forwarding information database 13B. Further, the display position is information representing the above-mentioned display position, the comment is information representing the forwarding comment itself, and the display pattern corresponds to the above-mentioned display mode, and is information representing the display mode of the corresponding forwarding comment.

In the example shown in Fig. 5, in the document file of which the identification ID is "F001", such a forwarding comment that "Be careful about the format!" is displayed in the form of a speech bubble (1) on the second row of the document image indicated by the document file. The effect of the display is registered at 11:00 on March 10, 2023.

Next, the history information database 13C according to the present exemplary embodiment will be described with reference to Fig. 6. Fig. 6 is a schematic diagram showing an example of the configuration of the history information database 13C according to the present exemplary embodiment.

The history information database 13C according to the present exemplary embodiment is a database in which information representing a history of a transmission status of the document file, which is subjected to management of the information processing system 1 according to the present exemplary embodiment, to each terminal apparatus 30 is registered. In the history information database 13C according to the present exemplary embodiment, as shown in Fig. 6 as an example, the information pieces of the identification ID, the transmission destination, and the transmission date and time are stored in association with each other.

The identification ID is the information identical to the identification ID of the forwarding information database 13B. The transmission destination is information representing a transmission destination of the corresponding document file. The transmission date and time is information representing the date and time at which the corresponding document file is transmitted to the corresponding transmission destination.

In the example shown in Fig. 6, it is registered that the document file to which "F001" is assigned as the identification ID is transmitted to an administrator at 13:18 on March 12, 2023.

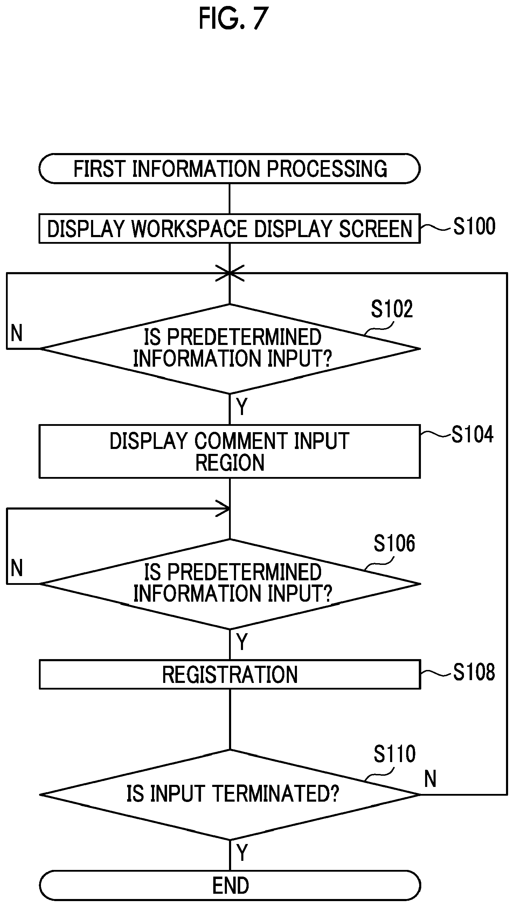

Next, operations of the information processing system 1 according to the present exemplary embodiment will be described with reference to Figs. 7 to 21. First, the operation of the terminal apparatus 30 in a case where first information processing is executed will be described with reference to Figs. 7 to 12. Fig. 7 is a flowchart showing an example of the first information processing according to the present exemplary embodiment.

In the present exemplary embodiment, in order for the administrator who manages a document as a processing target (hereinafter, referred to as a "target document") to input the forwarding comment to the target document, the administrator may perform an instruction input for issuing an instruction to execute the first information processing to the terminal apparatus 30 (hereinafter, referred to as an "administrator terminal"). In such a case, the CPU 31 of the administrator terminal executes the first information processing program 33A, thereby executing the first information processing shown in Fig. 7. In order to avoid confusion, here, description will be given of a case where the target document is designated in advance by the administrator.

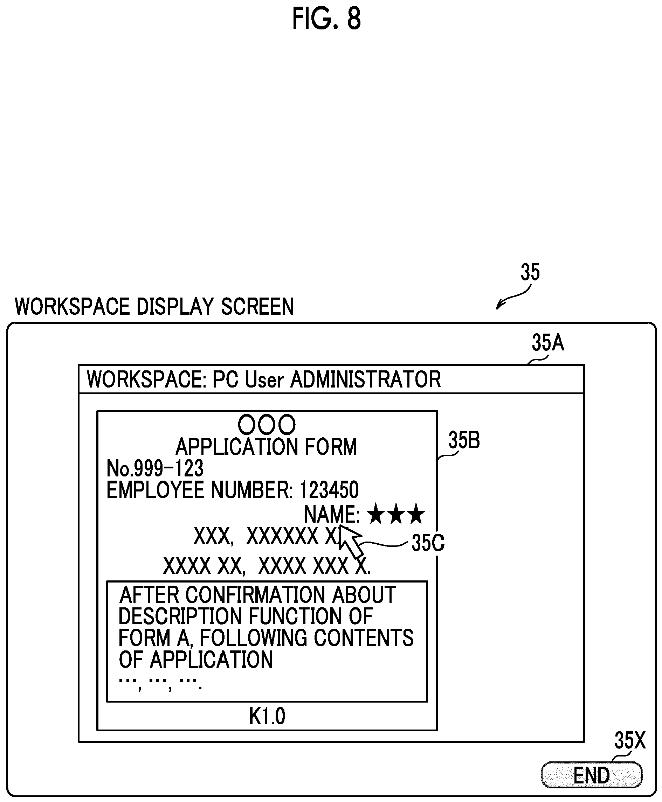

In step S100 of Fig. 7, the CPU 31 controls the display unit 35 such that the display unit 35 displays a workspace display screen for an administrator having a predetermined configuration. In step S102, the CPU 31 waits until predetermined information is input. Fig. 8 shows an example of the workspace display screen at the time of inputting the forwarding comment according to the present exemplary embodiment.

As shown in Fig. 8, on the workspace display screen at this point in time, a workspace display region 35A is displayed in a state where a target document 35B is displayed. In addition, at this time, the target document 35B is displayed in the workspace display region 35A, but is just displayed to indicate that the document is present in the workspace. Thus, the target document 35B is not opened. In a case where the workspace display screen is displayed on the display unit 35, the administrator performs an operation of designating the target document 35B with a mouse pointer 35C as shown in Fig. 8 as an example. In response to the operation, step S102 is determined to be positive, and the processing proceeds to step S104.

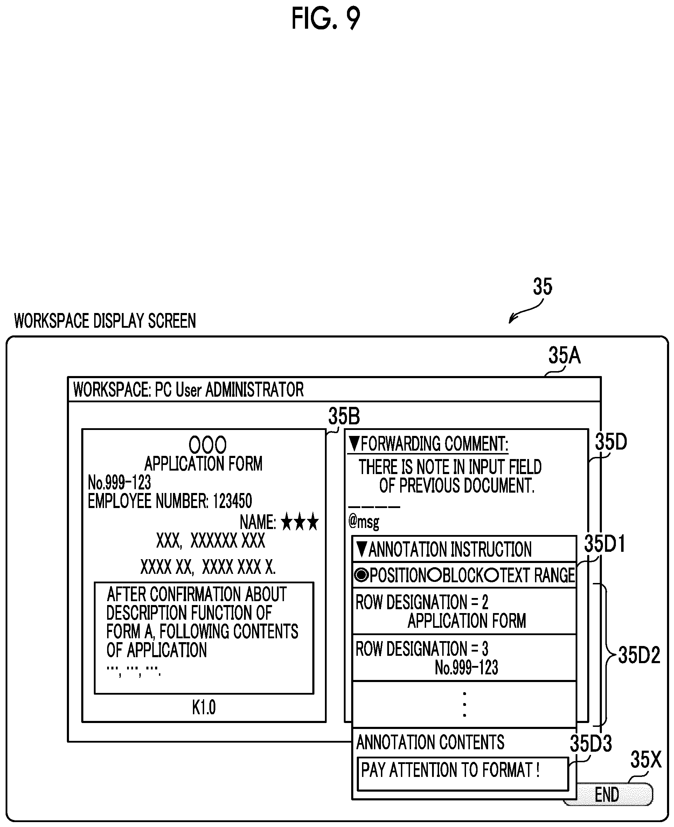

In step S104, the CPU 31 controls the display unit 35 such that the display unit 35 displays a comment input region 35D for inputting the forwarding comment to the target document on the workspace display region 35A. In step S106, the CPU 31 waits until the predetermined information is input. Fig. 9 shows an example of the workspace display screen at this point in time and thereafter. It should be noted that, at this point, a type designation region 35D1, a selection candidate display region 35D2, and an annotation content input region 35D3 are not displayed.

For example, in a case where the comment input region 35D shown in Fig. 9 is displayed, the administrator is able to input information representing the content of the forwarding comment to be input (in the example shown in Fig. 9, information representing that "There is a note in the input field of the previous document"). Then, in addition to the forwarding comment, in a case where the administrator wants to input a detailed forwarding comment for which a display position or the like is designated, a text string for starting the input (in the present exemplary embodiment, the text string is a text string such as "@ msg", and hereinafter referred to as a "designated text string").

In a case where the designated text string is input by the administrator, the CPU 31 controls the display unit 35 such that the display unit 35 displays the type designation region 35D1 and the annotation content input region 35D3 on the comment input region 35D as shown in Fig. 9 as an example. As shown in Fig. 9, in the type designation region 35D1 according to the present exemplary embodiment, any one of three types of "position", "block", and "text range" is capable of being designated. The three types of "position", "block", and "text range" are information for designating the display position of the forwarding comment.

Therefore, in a case where the type designation region 35D1 is displayed, the administrator designates an appropriate type in the type designation region 35D1. In a case where the "position" in the type designation region 35D1 is designated by the administrator, the CPU 31 controls the display unit 35 such that the display unit 35 displays the selection candidate display region 35D2 shown in Fig. 9 as an example. As shown in Fig. 9, in the selection candidate display region 35D2 according to the present exemplary embodiment, the sentences described in the target document are displayed in row units. For example, in Fig. 9, the "application form" described in the second row and the "No. 999-123" described in the third row of the target document are displayed.

Therefore, the administrator inputs the forwarding comment in the annotation content input region 35D3, and designates a row corresponding to the display position of the forwarding comment in the selection candidate display region 35D2.

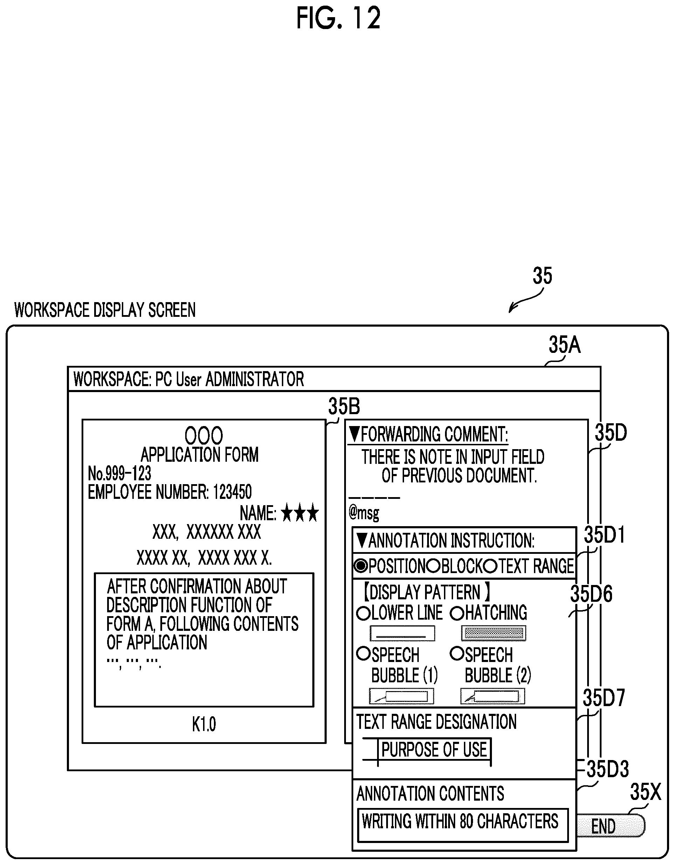

In a case where the above-mentioned operation is performed by the administrator, the CPU 31 controls the display unit 35 such that the display unit 35 displays a display pattern designation region 35D6 shown in Fig. 12 as an example. Therefore, the administrator designates an appropriate pattern as a form, in which the forwarding comment input by the administrator is displayed at the display position designated by the administrator, in the display pattern designation region 35D6. In a case where any display pattern in the display pattern designation region 35D6 is designated by the administrator, a positive determination is made in step S106, and the processing proceeds to step S108.

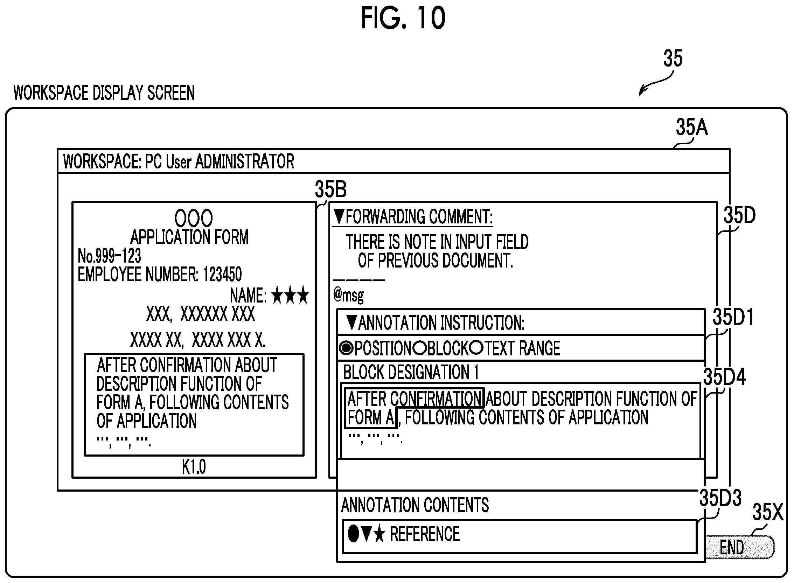

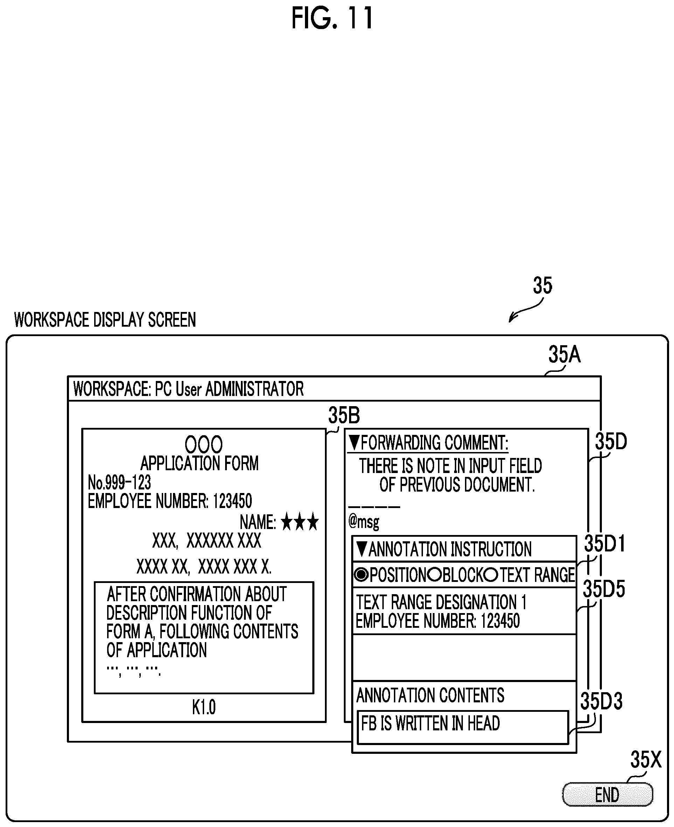

It should be noted that Fig. 10 shows an example of the block designation region 35D4 to be displayed instead of the selection candidate display region 35D2 in a case where the administrator designates the "block" in the type designation region 35D1. Further, Fig. 11 shows an example of a text range designation region 35D5 to be displayed instead of the selection candidate display region 35D2 in a case where the administrator designates a "text range" in the type designation region 35D1. In any of these methods, the forwarding comment is displayed in association with the position designated by the user. For example, in Fig. 10, in a case where the "block" is designated, "After confirmation of the form A..." is designated by being surrounded by a substantially rectangular shape in the block designation region 35D4. Therefore, in such a case, the position of "After confirmation of the form A..." is the display position at which the forwarding comment is displayed. Further, in Fig. 11, in a case where the "text range" is designated, the "employee number: 123450" is designated for the text range designation region 35D5. Therefore, in such a case, a position of the "employee number: 123450" is the display position at which the forwarding comment is displayed.

By designating any type in the type designation region 35D1, the administrator is able to use a method of designating the display position by any of the selection candidate display region 35D2, the block designation region 35D4, and the text range designation region 35D5.

In step S108, the CPU 31 stores (registers), as forwarding information, information pieces of the forwarding comment, the display position, and the display pattern obtained by the operation performed by the administrator, together with the date and time at this time, in the storage region corresponding to the target document of the forwarding information database 13B.

Meanwhile, in a case where an input of all the forwarding comments for the target document is completed, the administrator designates an end button 35X displayed on the workspace display screen by using the input unit 34.

Therefore, in step S110, the CPU 31 determines whether or not the input of the forwarding comment by the administrator is completed by determining whether or not the end button 35X is designated. Then, the CPU 31 returns to step S102 in a case where a negative determination is made in this determination, and ends the first information processing in a case where a positive determination is made. Through the above-mentioned first information processing, the forwarding information database 13B shown in Fig. 5 is constructed as an example.

In the above-mentioned first information processing, in order to enable easy input of the forwarding information, information excluding the specific content of the comment is input by selecting and designating the information, but is not particularly limited thereto as long as the display position can be designated. For example, a form, in which the forwarding information is input using a conventionally known text description format, may be used.

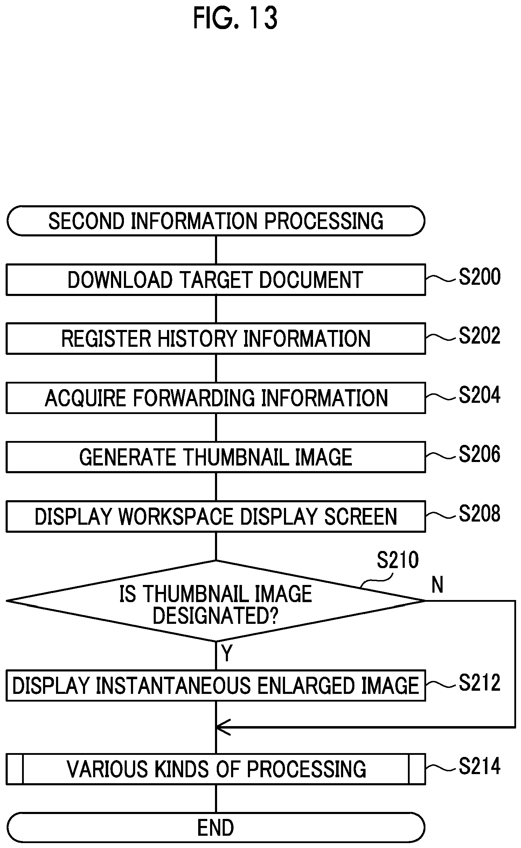

Next, the operation of the terminal apparatus 30 in a case where the second information processing is executed will be described with reference to Figs. 13 to 19. Fig. 13 is a flowchart showing an example of the second information processing according to the present exemplary embodiment.

In the present exemplary embodiment, a user, who performs the processing according to the instruction by the corresponding forwarding comment on the target document, may perform an instruction input for instructing execution of the second information processing on the terminal apparatus 30 (hereinafter, referred to as a "user terminal") such that the user (hereinafter, simply referred to as the "user") executes the processing. In such a case, the CPU 31 of the user terminal executes the second information processing program 33B, thereby executing the second information processing shown in Fig. 13. In order to avoid confusion, here, description will be given of a case where the target document is designated in advance by the user. Further, here, description will be given of a case where the forwarding information corresponding to the target document is registered in the forwarding information database 13B.

In step S200 of Fig. 13, the CPU 31 acquires the document file of the target document (hereinafter, simply referred to as a "document file") by downloading the document file together with the identification ID of the document file from the forwarding information database 13B. In step S202, the CPU 31 stores (registers), in the history information database 13C, each of the information (in the present exemplary embodiment, the user's account) capable of identifying the user itself and the information representing the date and time of this time point, as each information of the transmission destination and the transmission date and time corresponding to the identification ID of the target document.

In step S204, the CPU 31 acquires the forwarding information associated with the identification ID of the target document by downloading the forwarding information from the forwarding information database 13B.

In step S206, the CPU 31 generates image data (hereinafter, "thumbnail image data"), which represents the target document and represents a thumbnail image having a predetermined reference size as a relatively small size, by using the acquired forwarding information and document file. At this time, the CPU 31 stores information, which represents the acquired forwarding information, as metadata of the thumbnail image data. Further, at this time, the CPU 31 adjusts the information, which represents the display position in the acquired forwarding information, to the information which represents the position corresponding to the size of the thumbnail image indicated by the generated thumbnail image data.

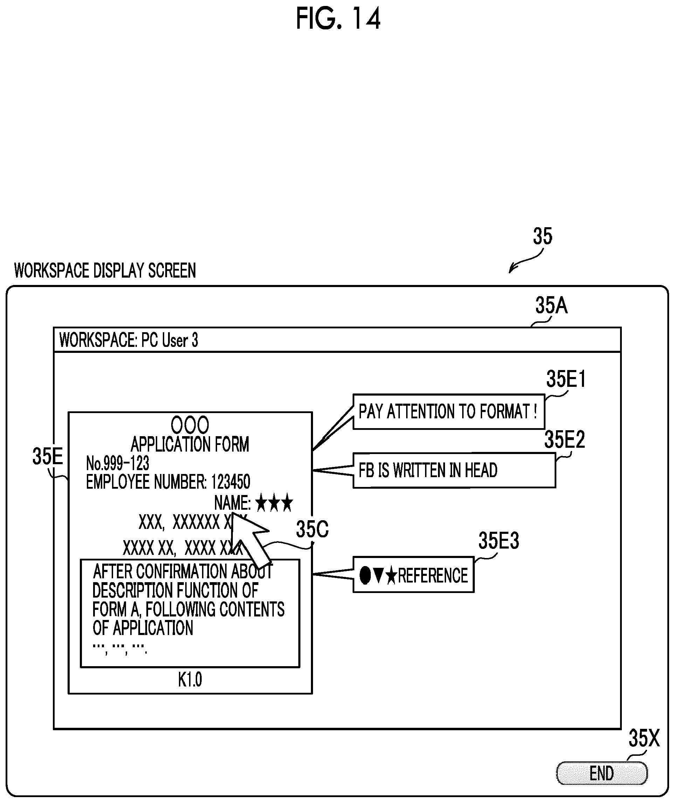

In step S208, the CPU 31 controls the display unit 35 such that the display unit 35 displays the workspace display screen having a predetermined configuration by using the generated thumbnail image data. Fig. 14 shows an example of the workspace display screen at the time of displaying the forwarding comment according to the present exemplary embodiment.

As shown in Fig. 14, the thumbnail image 35E of the target document indicated by the generated thumbnail image data is displayed in the workspace display region 35A, on the workspace display screen at this point in time. Further, the forwarding comments 35E1, 35E2, ... are displayed along with the thumbnail image 35E, on the workspace display screen. At this time, the CPU 31 performs control to display the forwarding comments 35E1, 35E2, ... at the display position indicated by the acquired forwarding information in the display pattern indicated by the forwarding information by using the metadata of the thumbnail image data. However, in such a case, since the reference size is a relatively small size, the CPU 31 applies only positions in the vertical direction as the display positions of the forwarding comments 35E1, 35E2, ... from the display position indicated by the forwarding information.

In a case where the workspace display screen is displayed on the display unit 35, the user may want to perform instantaneous enlarged display for temporarily displaying an enlarged image of the displayed thumbnail image 35E. In such a case, as shown in Fig. 14 as an example, an operation of designating the thumbnail image 35E is performed using the mouse pointer 35C.

Therefore, in step S210, the CPU 31 determines whether or not the user designates the thumbnail image 35E. In a case where a negative determination is made, the processing proceeds to step S214. In a case where a positive determination is made, the processing proceeds to step S212.

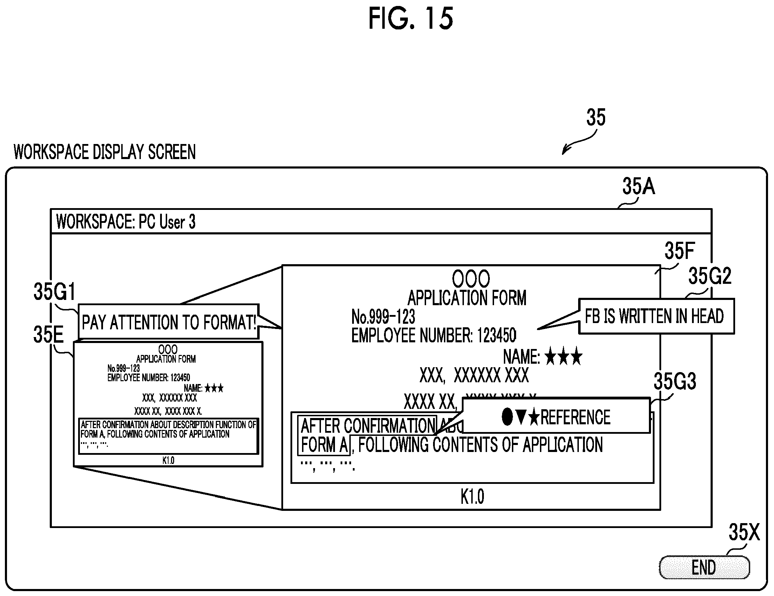

In step S212, the CPU 31 performs the same processing as in step S206 to generate image data (hereinafter, referred to as "enlarged image data") representing the target document having a predetermined size greater than the reference size. Then, using the generated enlarged image data, as shown in Fig. 15 as an example, the CPU 31 performs control to display the enlarged document image 35F, which is an image representing the target document enlarged than the thumbnail image 35E, in the workspace display region 35A, for only a predetermined period (in the present exemplary embodiment, 5 seconds).

As shown in Fig. 15, in the enlarged document image 35F according to the present exemplary embodiment, not only the positions in the vertical direction but also the positions in the horizontal direction as the display positions of the forwarding comments 35G1, 35G2, ... are applied from the display position indicated by the forwarding information. Accordingly, the user is able to grasp the part corresponding to the forwarding comment in more detail by referring to the enlarged document image 35F.

In step S214, the CPU 31 executes processing corresponding to the processing according to the displayed forwarding comment executed by the user, and then ends the second information processing.

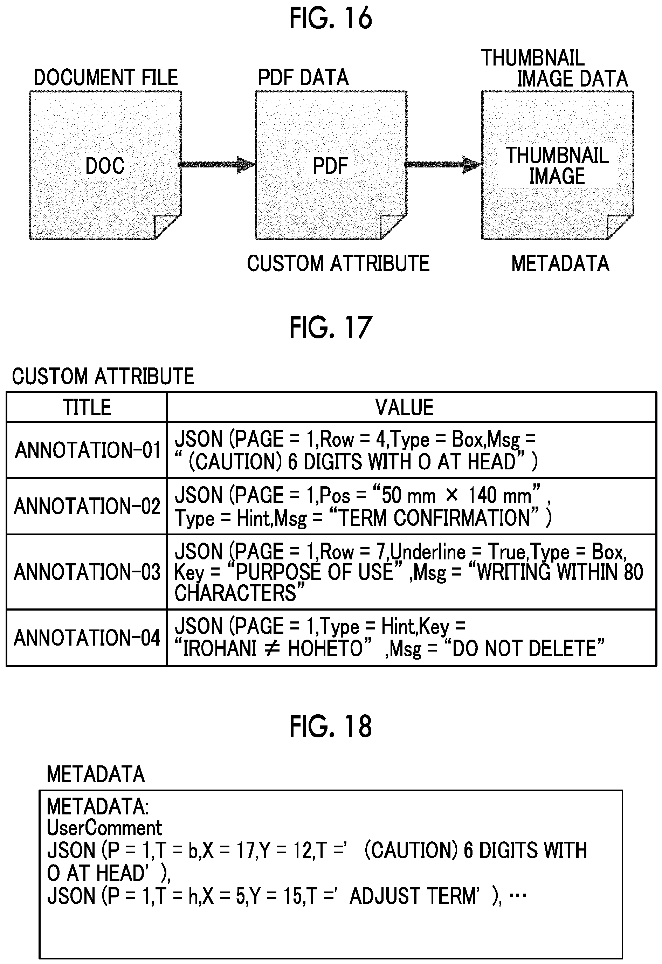

Although not mentioned in the above description of the second information processing, an example of the above-mentioned method of generating the thumbnail image data will be described with reference to Figs. 16 to 18. Here, description will be given of a case where the target document is a document obtained by Microsoft Word (registered trademark).

In such a case, as shown in Fig. 16 as an example, there is a method of generating the thumbnail image data after once converting the document file of the target document into portable document format (PDF) data. In such a case, since the custom attribute can be recorded in the PDF data, the information indicated by the forwarding information is temporarily recorded once in the custom attribute of the PDF data, as shown in Fig. 17 as an example. Then, in such a case, using the custom attribute of the PDF data, as shown in Fig. 18 as an example, the information indicated by the forwarding information is recorded in the metadata of the generated thumbnail image data.

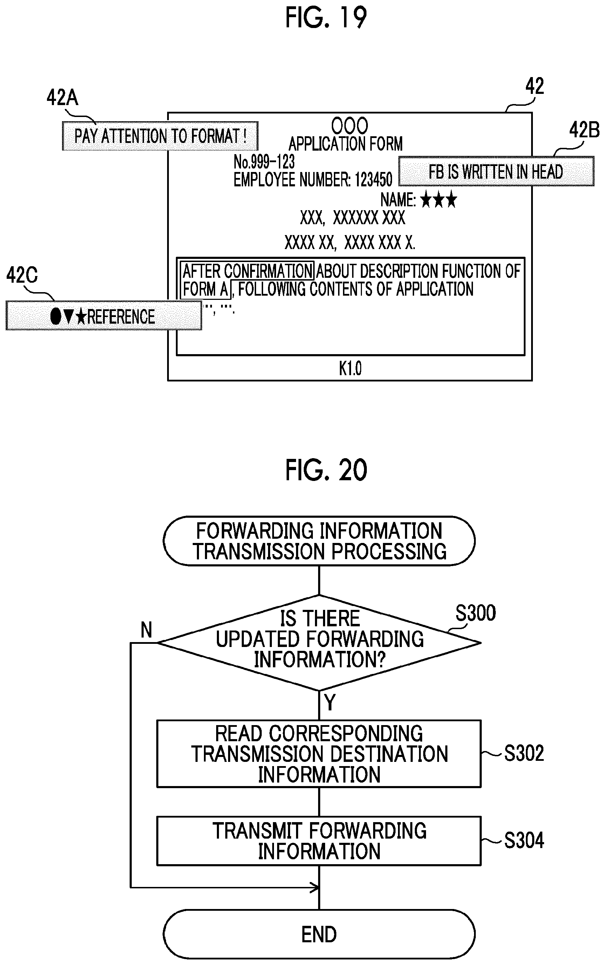

Further, as shown in Fig. 19 as an example, in the above-mentioned second information processing, the displayed forwarding comment may be reflected in the corresponding document file so as to be the post-it annotations 42A, 42B, ....

Meanwhile, in the information processing system 1 according to the present exemplary embodiment, the administrator is able to update the forwarding information registered in the forwarding information database 13B. Thus, the forwarding information transmission processing is executed on the server 10 in order to cope with the case of performing the update.

Next, referring to Fig. 20, description will be given of an operation of the server 10 in a case where the forwarding information transmission processing is executed. Fig. 20 is a flowchart showing an example of the forwarding information transmission processing according to the present exemplary embodiment.

In the present exemplary embodiment, the CPU 11 of the server 10 executes the forwarding information transmission processing program 13A at a predetermined timing (in the present embodiment, a timing of every 10 minutes), thereby executing the forwarding information transmission processing shown in Fig. 20.

In step S300 of Fig. 20, the CPU 11 reads all the information from the forwarding information database 13B. Then, the CPU 11 determines whether or not there is information in which the registration date and time in the read information is date and time after a time point at which the present forwarding information transmission processing is previously executed, and thus determines whether or not there is updated forwarding information (hereinafter, referred to as "update forwarding information"). Then, in a case where this determination is a negative determination, the CPU 11 ends the forwarding information transmission processing. In contrast, in a case where the determination is positive determination, the processing proceeds to step S302.

In step S302, the CPU 11 reads information representing a transmission destination (hereinafter, referred to as "transmission destination information") corresponding to the identification ID of the update forwarding information from the history information database 13C. In step S304, the CPU 11 transmits the forwarding information and the corresponding identification ID to the terminal apparatus 30 corresponding to the transmission destination indicated by the read transmission destination information, and then ends the forwarding information transmission processing.

The terminal apparatus 30 that receives the forwarding information and the identification ID executes processing of reflecting the forwarding information on the document indicated by the identification ID. Thereby, in displaying this document on the workspace display screen, it is possible to display the updated forwarding comment. By this forwarding information transmission processing, in a case where the forwarding information is changed after the existing document file is downloaded, it is possible to avoid overlooking the change.

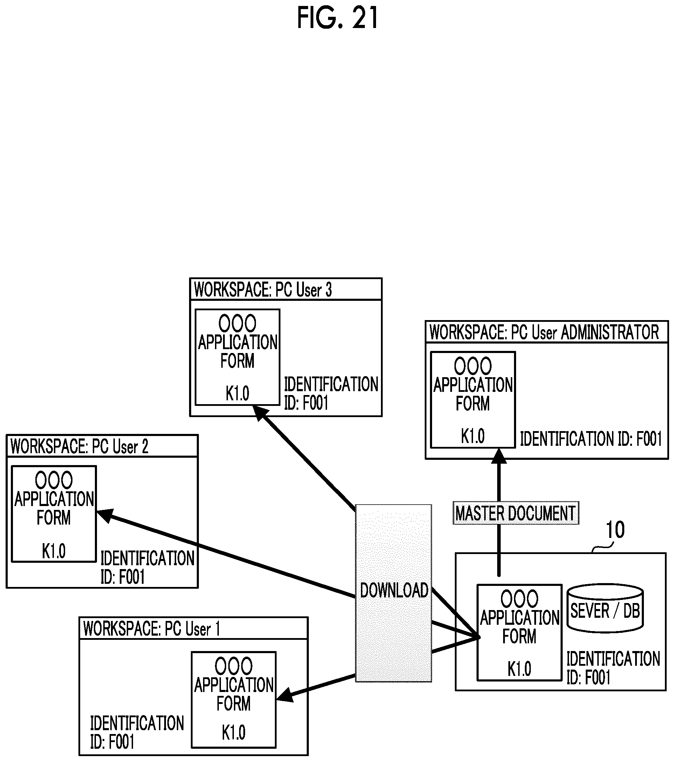

According to the above-mentioned information processing system 1, as shown in Fig. 21 as an example, the administrator registers the forwarding information with the document file registered in the server 10 as the master document. Therefore, in a case where a different user downloads the master document, the forwarding comment indicated by the registered forwarding information can be displayed at the registered display position.

However, the present invention is not limited to this aspect. For example, the forwarding information may be registered or updated by not only the administrator but also the different user. In addition, instead of registration of the master document in the server 10, the master document may be registered in the terminal apparatus 30 used by the administrator or the terminal apparatus 30 of the different user.

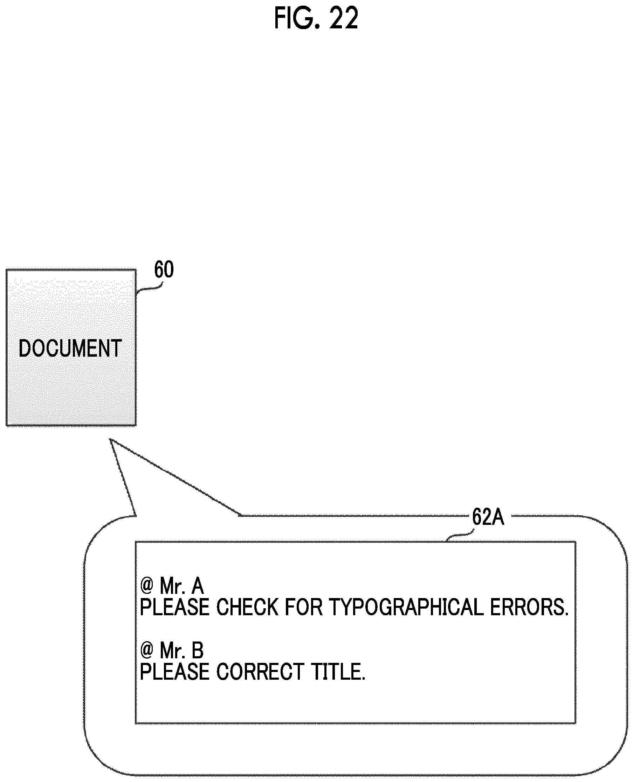

Further, other modification examples will be described below, with reference to Figs. 22 to 29. Fig. 22 to Fig. 29 are schematic diagrams provided for explaining the modification examples of the exemplary embodiment of the present disclosure.

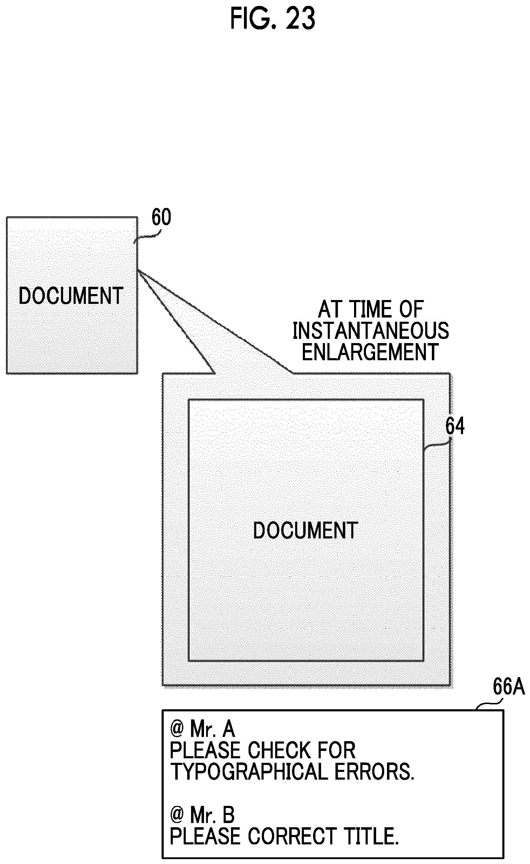

In the related art, in a case where the forwarding comment 62A is input as shown in Fig. 22 as an example, when instantaneous enlarged display and the like of the document 60 is performed as shown in Fig. 23 as an example, the forwarding comment 66A is displayed regardless of the display position of each text in the document 64. In addition, "@ Mr. A" and "@ Mr. B" in the comment 66A mean that the contents described in the comment 66A are directed to specific persons such as Mr. A and Mr. B. As shown in the example of Fig. 22, the phrase "Please check for typographical errors" is directed to Mr. A, and the phrase "Please correct the title" is directed to Mr. B.

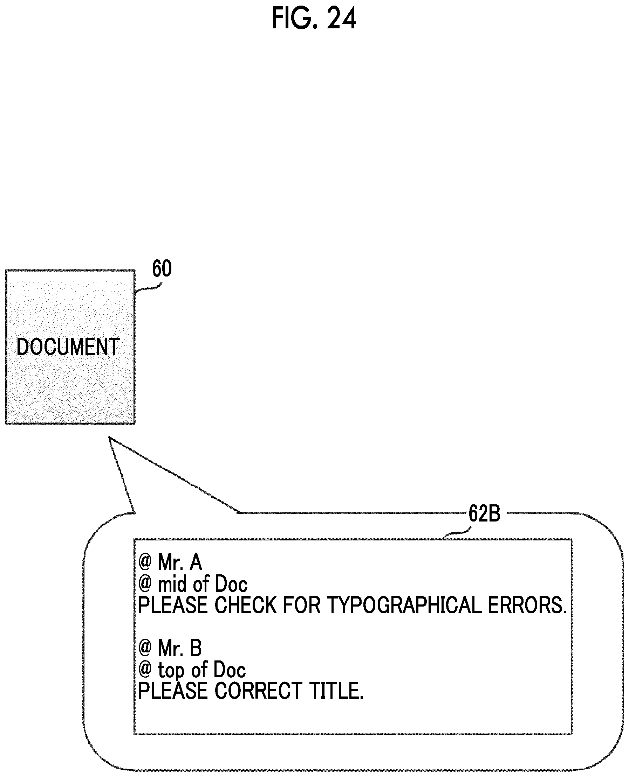

On the other hand, in the technique of the present disclosure, as shown in Fig. 24 as an example, the forwarding comment 62B may include the text string representing the display position. As shown in the example of Fig. 24, the term "@ mid of Doc" is applied as a text string representing a central portion of a document 60 in the vertical direction, and the term "@ top of Doc" is applied as a text string representing a top portion of the document 60 in the vertical direction.

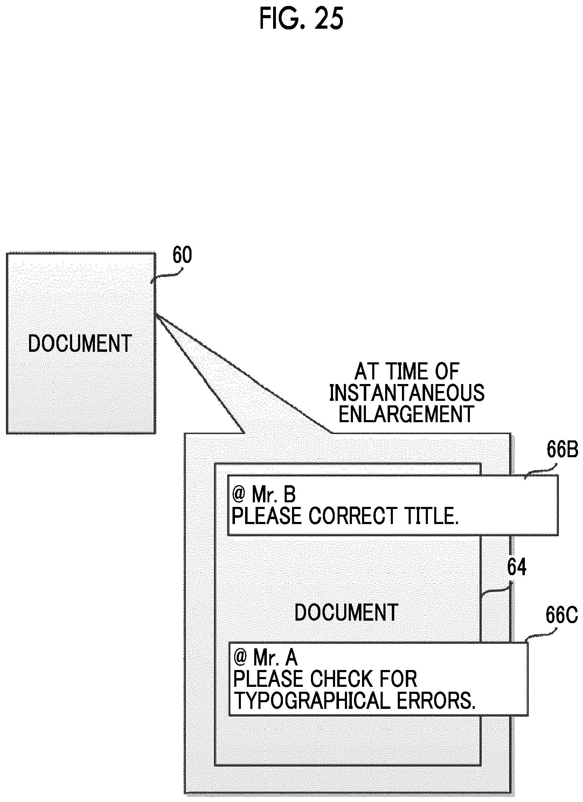

Therefore, according to this aspect, as shown in Fig. 25 as an example, in a case where the document 60 is instantaneously displayed in an enlarged manner, the corresponding forwarding comments 66B and 66C can be displayed at the display position corresponding to the text string representing the display position in the document 64. For example, as shown in Fig. 25, the comment content "Please check for typographical errors", to which "@ mid of Doc" is applied, is displayed near the middle of the document 64. Further, the comment content "Please correct the title", to which "@ top of Doc" is applied, is displayed near the upper part of the document 64.

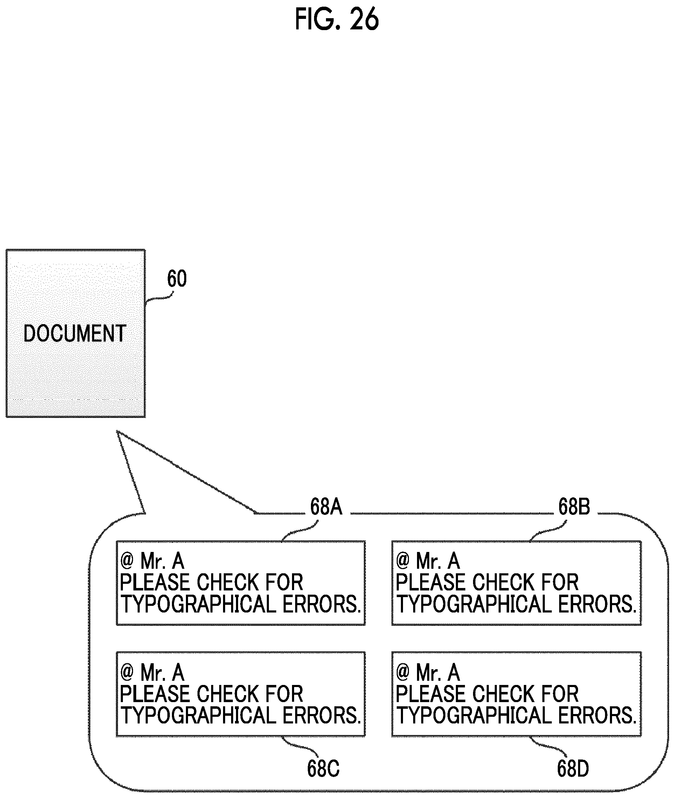

Further, in the technique of the present disclosure, as shown in Fig. 26 as an example, by performing control such that a plurality of comment input regions 68A, 68B, ... are displayed, a position corresponding to the position, at which a comment input region where the forwarding comment is input is displayed, may be received as the display position of the forwarding comment. In the example shown in Fig. 26, the length × width of the text of the document 60 is divided into 2 × 2. The comment input region 68A corresponds to an upper left division region of the document 60. Similarly, the comment input region 68B, the comment input region 68C, and the comment input region 68D correspond to an upper right division region, a lower left division region, and a lower right division region, respectively.

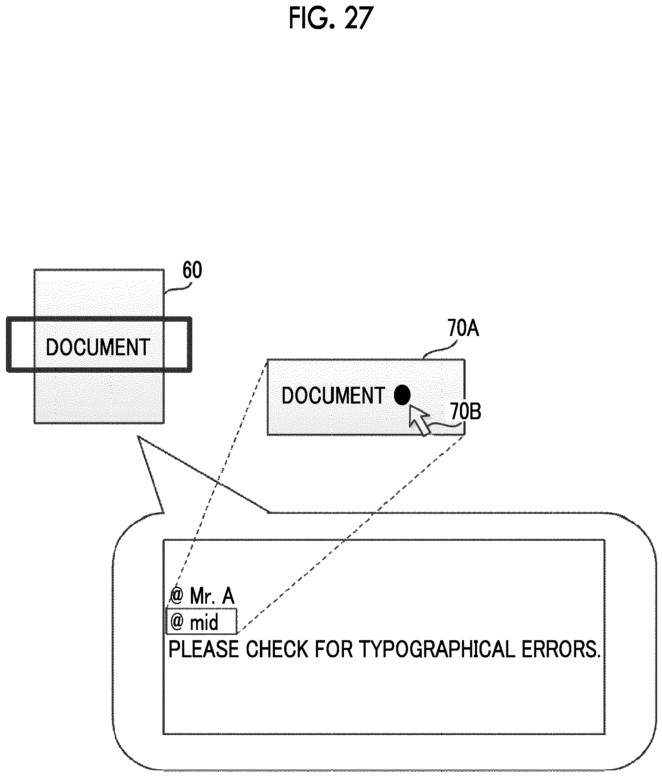

Further, in the technique of the present disclosure, as shown in Fig. 27 as an example, in a case where a predetermined text string ("@ mid" in the example shown in Fig. 27) is input, a position designation screen 70A for receiving a designation of the display position may be displayed, in the region corresponding to the text string of the document. In this form, the designation of the display position is received via the position designation screen 70A.

In the example shown in Fig. 27, in a case where "@ mid..." is input, a part in the vicinity of the middle of the document 60 is displayed in an enlarged manner on the position designation screen 70A, and a user selects a position with the mouse pointer 70B and then inputs the forwarding comment. Then, at the time of displaying the forwarding comment, the forwarding comment is displayed at the selected position on the corresponding document.

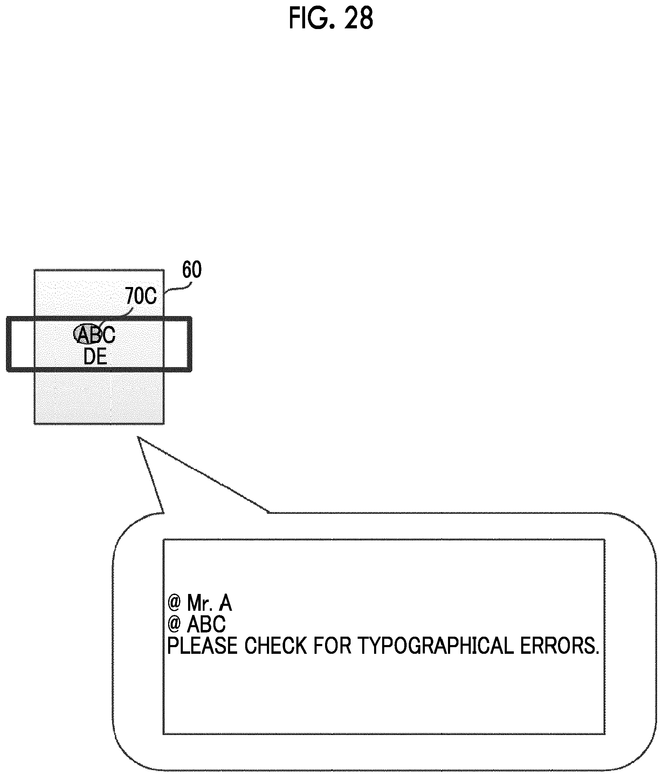

Further, in the technique of the present disclosure, as shown in Fig. 28 as an example, a partial region of the text string constituting the document file (in the example shown in Fig. 28, a region of the text string "ABC") may be received, and the forwarding comment may be displayed. In such a case, the forwarding comment may be displayed in association with the position of the text string subjected to the designation.

In the example shown in Fig. 28, in the case where "@ ABC..." is input, the text string "ABC" included in the document 60 is searched, and the forwarding comment "Please check for typographical errors" is inserted at the position 70C of the text string "ABC".

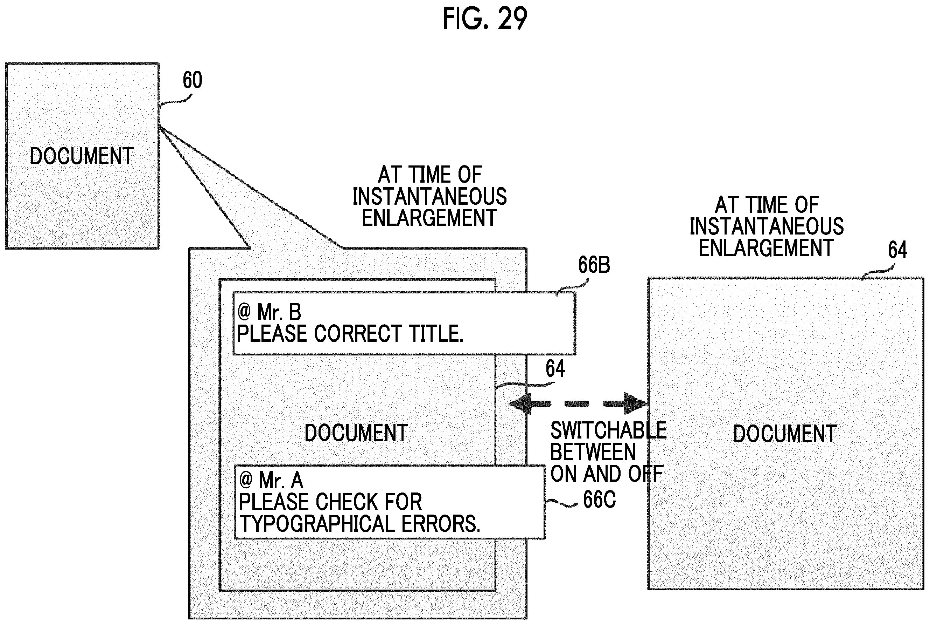

Further, in the above-mentioned various aspects, as shown in Fig. 29 as an example, the display and non-display of the forwarding comments 66B and 66C may be settable in a case where the instantaneous enlarged display is performed.

Further, the above-mentioned exemplary embodiment has described the case where the forwarding comment is constantly displayed on the displayed document image, but the present invention is not limited thereto. For example, the forwarding comment may be displayed in a tooltip format only in a case where the image region corresponding to the display position is designated using a mouse pointer or the like.

Further, the above-mentioned exemplary embodiment has described the case in which the technique of the present disclosure is applied to the system including the server 10, but the present disclosure is not limited thereto. For example, the technique of the present disclosure may be applied to a system using only the plurality of terminal apparatuses 30 connected to each other through a network. In such a case, the exchange of various types of information between the terminal apparatus 30 and the server 10 in the above-mentioned exemplary embodiment is unnecessary. Further, in such a case, any terminal apparatus 30 executes the forwarding information transmission processing.

Furthermore, the above-mentioned exemplary embodiment has described the case in which the various databases 13B and 13C are registered in the server 10, but the present disclosure is not limited thereto. For example, the databases may be registered in any terminal apparatus 30 or another apparatus accessible from the terminal apparatus 30.

Further, although not mentioned in the above-mentioned exemplary embodiment, information itself representing the forwarding information stored as metadata of the thumbnail image data may be displayed on the workspace display screen.

Further, the above-mentioned exemplary embodiment has described the case where the forwarding information is registered in the forwarding information database 13B and the forwarding comment is displayed on the download destination document by using the forwarding information, but the present invention is not limited thereto. For example, the forwarding information may be registered in the metadata of the document file of the master document, and the forwarding comment may be displayed for the download destination document by using the forwarding comment. In such a case, the forwarding information database 13B is unnecessary.

Further, the above-mentioned exemplary embodiment has described the case where the forwarding comment is displayed for the thumbnail image or the instantaneous enlarged image, but the present invention is not limited thereto. For example, the forwarding comment may be displayed on the document itself indicated by the document file.

Further, the above exemplary embodiment has described a case where a document file having a document having only one page is applied, but the present invention is not limited thereto. For example, a file having a plurality of pages may be applied as the document file. In such a case, the file also includes the corresponding page number as the information representing the display position of the forwarding information.

The exemplary embodiment has been described above. However, the technical scope of the invention is not limited to the scope described in the above-mentioned exemplary embodiment. Various modification examples or improvements of the above-mentioned exemplary embodiment can be made without departing from the gist of the invention, and the modified or improved exemplary embodiments are also included in the technical scope of the invention.

Further, the above-mentioned exemplary embodiment does not limit the invention according to the claims, and not all combinations of features described in the exemplary embodiment are necessary for means for addressing the problems in the invention. The above-mentioned exemplary embodiment includes inventions at various stages, and various inventions are extracted by combinations of a plurality of disclosed constituent elements. Even in a case where some constituent elements are deleted from all the constituent elements shown in the exemplary embodiment, as long as an effect is obtained, a configuration in which some constituent elements are deleted can be extracted as an invention.

In the embodiments above, the term "processor" refers to hardware in a broad sense. Examples of the processor include general processors (e.g., CPU: Central Processing Unit) and dedicated processors (e.g., GPU: Graphics Processing Unit, ASIC: Application Specific Integrated Circuit, FPGA: Field Programmable Gate Array, and programmable logic device).

In the embodiments above, the term "processor" is broad enough to encompass one processor or plural processors in collaboration which are located physically apart from each other but may work cooperatively. The order of operations of the processor is not limited to one described in the embodiments above, and may be changed.

In addition, the configuration of the server 10 and the terminal apparatus 30 described in the above-mentioned exemplary embodiment is an example, and it goes without saying that unnecessary portions may be deleted or new portions may be added without departing from the gist of the invention.

Further, the flow of various processes described in the above-mentioned exemplary embodiment is also an example, and it goes without saying that unnecessary steps may be deleted, new steps may be added, or the processing order may be changed without departing from the gist of the invention.

### Supplementary Note

(((1))) An information processing system comprising:
   one or a plurality of processors,
   wherein the processor is configured to:
      perform control to display a comment input region that receives an input of a comment for a document indicated by a document file in a state where the document file is not opened;
      receive a designation of a display position of the comment for an image representing the document file on the basis of information which is input to the comment input region; and
      perform control to display the comment at the designated display position of the image representing the document file.
(((2))) The information processing system according to (((1))),
   wherein the input information is specific text information for designating the display position.
(((3))) The information processing system according to (((1))),
   wherein the image representing the document file is a thumbnail image.
(((4))) The information processing system according to (((3))), wherein the processor is configured to:
   perform control to display the document in an enlarged manner in a case where the thumbnail image is selected and designated and simultaneously perform control to display the comment at the display position of the document.
(((5))) The information processing system according to (((4))), wherein the processor is configured to:
   perform control to display the comment on the thumbnail image along only a position in a vertical direction of the display position; and
   perform control to display the comment on the document, which is displayed in the enlarged manner, in accordance with both positions in the vertical direction and a horizontal direction of the display position.
(((6))) The information processing system according to any one of (((1))) to (((5))), wherein the processor is configured to:
   further receive designation of a display mode of the comment; and
   perform control to display the comment in the received display mode.
(((7))) The information processing system according to any one of (((1))) to (((6))), wherein the processor is configured to:
   perform control to display a plurality of the comment input regions; and
   receive a position corresponding to a position where the comment input region in which the comment is input is displayed, as the display position.
(((8))) The information processing system according to any one of (((1))) to (((7))), wherein the processor is configured to:
   further perform control to display a position designation screen that receives the designation of the display position for a region corresponding to a predetermined text string of the document in a case where the text string is input to the comment input region; and
   receive the designation of the display position via the position designation screen.
(((9))) The information processing system according to (((8))), wherein the processor is configured to:
   receive an input of the text string on the position designation screen; and
   receive a position of the text string, for which input is received, as the display position in a case where the document file includes the text string.

In the information processing system according to (((1))), in a case where the comment for the document is input without opening the document, the comment can be displayed at the corresponding part without proposedly referring to the corresponding part in the comment.

In the information processing system according to (((2))), by inputting the specific text information, the comment can be displayed at a position indicated by the text information.

In the information processing system according to (((3))), the comment can be displayed at a designated position without displaying the document itself.

In the information processing system according to (((4))), the comment can be displayed at the designated position on the document displayed in an enlarged manner.

In the information processing system according to (((5))), precision of the display position can be changed in accordance with the size of the displayed image.

In the information processing system according to (((6))), the display mode of the comment can be specified.

In the information processing system according to (((7))), on the basis of the position at which the comment is input, the display position of the comment can be designated.

In the information processing system according to (((8))), the display position of the corresponding comment can be designated by the predetermined text string.

In the information processing system according to (((9))), the display position of the corresponding comment can be designated by the input text string.

The foregoing description of the exemplary embodiments of the present invention has been provided for the purposes of illustration and description. It is not intended to be exhaustive or to limit the invention to the precise forms disclosed. Obviously, many modifications and variations will be apparent to practitioners skilled in the art. The embodiments were chosen and described in order to best explain the principles of the invention and its practical applications, thereby enabling others skilled in the art to understand the invention for various embodiments and with the various modifications as are suited to the particular use contemplated. It is intended that the scope of the invention be defined by the following claims and their equivalents.

### Brief Description of the Reference Symbols

1: information processing system
10: server
11: CPU
12: memory
13: storage unit
13A: forwarding information transmission processing program
13B: forwarding information database
13C: history information database
14: input unit
15: display unit
16: medium reading writing device
17: recording medium
18: communication I/F unit
30: terminal apparatus
31: CPU
31A: first display control unit
31B: reception unit
31C: second display control unit
32: memory
33: storage unit
33A: first information processing program
33B: second information processing program
34: input unit
35: display unit
35A: workspace display region
35B: target document
35C: mouse pointer
35D: comment input region
35D1: type designation region
35D2: selection candidate display region
35D3: annotation content input region
35D4: block designation region
35D5: text range designation region
35D6: display pattern designation region
35E: thumbnail image
35E1, 35E2, ... : forwarding comment
35F: enlarged document image
35G1, 35G2, ... : forwarding comment
35X: end button
36: medium reading writing device
37: recording medium
38: communication I/F unit
42A, 42B, ... : post-it annotation
60: document
62A, 62B: forwarding comment
64: document
66A to 66C: forwarding comment
68A to 68D: comment input region
70A: position designation screen
70B: mouse pointer
70C: position
N: network

## Claims

1. An information processing system comprising:
one or a plurality of processors,
wherein the processor is configured to:
perform control to display a comment input region that receives an input of a comment for a document indicated by a document file in a state where the document file is not opened;
receive a designation of a display position of the comment for an image representing the document file on the basis of information which is input to the comment input region; and
perform control to display the comment at the designated display position of the image representing the document file.

2. The information processing system according to claim 1,
wherein the input information is specific text information for designating the display position.

3. The information processing system according to claim 1,
wherein the image representing the document file is a thumbnail image.

4. The information processing system according to claim 3, wherein the processor is configured to:
perform control to display the document in an enlarged manner in a case where the thumbnail image is selected and designated and simultaneously perform control to display the comment at the display position of the document.

5. The information processing system according to claim 4, wherein the processor is configured to:
perform control to display the comment on the thumbnail image along only a position in a vertical direction of the display position; and
perform control to display the comment on the document, which is displayed in the enlarged manner, in accordance with both positions in the vertical direction and a horizontal direction of the display position.

6. The information processing system according to any one of claims 1 to 5, wherein the processor is configured to:
further receive designation of a display mode of the comment; and
perform control to display the comment in the received display mode.

7. The information processing system according to any one of claims 1 to 6, wherein the processor is configured to:
perform control to display a plurality of the comment input regions; and
receive a position corresponding to a position where the comment input region in which the comment is input is displayed, as the display position.

8. The information processing system according to any one of claims 1 to 7, wherein the processor is configured to:
further perform control to display a position designation screen that receives the designation of the display position for a region corresponding to a predetermined text string of the document in a case where the text string is input to the comment input region; and
receive the designation of the display position via the position designation screen.

9. The information processing system according to claim 8, wherein the processor is configured to:
receive an input of the text string on the position designation screen; and
receive a position of the text string, for which input is received, as the display position in a case where the document file includes the text string.

10. An information processing program that causes a computer to execute process comprising:
performing control to display a comment input region that receives an input of a comment for a document indicated by a document file in a state where the document file is not opened;
receiving a designation of a display position of the comment for an image representing the document file on the basis of information which is input to the comment input region; and
performing control to display the comment at the designated display position of the image representing the document file.

11. An information processing method comprising:
performing control to display a comment input region that receives an input of a comment for a document indicated by a document file in a state where the document file is not opened;
receiving a designation of a display position of the comment for an image representing the document file on the basis of information which is input to the comment input region; and
performing control to display the comment at the designated display position of the image representing the document file.

## Amended claims

### Amended claims in accordance with Rule 137(2) EPC.

1. An information processing system comprising:
one or a plurality of processors,
wherein the processor is configured to:
perform control to display a comment input region that receives an input of a comment for a document indicated by a document file in a state where the document file is not opened;
receive a designation of a display position of the comment for an image representing the document file on the basis of information which is input to the comment input region, wherein the input information is specific text information for designating the display position; and
perform control to display the comment at the designated display position of the image representing the document file.

2. The information processing system according to claim 1,
wherein the image representing the document file is a thumbnail image.

3. The information processing system according to claim 2, wherein the processor is configured to:
perform control to display the document in an enlarged manner in a case where the thumbnail image is selected and designated and simultaneously perform control to display the comment at the display position of the document.

4. The information processing system according to claim 3, wherein the processor is configured to:
perform control to display the comment on the thumbnail image along only a position in a vertical direction of the display position; and
perform control to display the comment on the document, which is displayed in the enlarged manner, in accordance with both positions in the vertical direction and a horizontal direction of the display position.

5. The information processing system according to any one of claims 1 to 4, wherein the processor is configured to:
further receive designation of a display mode of the comment; and
perform control to display the comment in the received display mode.

6. The information processing system according to any one of claims 1 to 5, wherein the processor is configured to:
perform control to display a plurality of the comment input regions; and
receive a position corresponding to a position where the comment input region in which the comment is input is displayed, as the display position.

7. The information processing system according to any one of claims 1 to 6, wherein the processor is configured to:
further perform control to display a position designation screen that receives the designation of the display position for a region corresponding to a predetermined text string of the document in a case where the text string is input to the comment input region; and
receive the designation of the display position via the position designation screen.

8. The information processing system according to claim 7, wherein the processor is configured to:
receive an input of the text string on the position designation screen; and
receive a position of the text string, for which input is received, as the display position in a case where the document file includes the text string.

9. An information processing program that causes a computer to execute process comprising:
performing control to display a comment input region that receives an input of a comment for a document indicated by a document file in a state where the document file is not opened;
receiving a designation of a display position of the comment for an image representing the document file on the basis of information which is input to the comment input region, wherein the input information is specific text information for designating the display position; and
performing control to display the comment at the designated display position of the image representing the document file.

10. An information processing method comprising:
performing control to display a comment input region that receives an input of a comment for a document indicated by a document file in a state where the document file is not opened;
receiving a designation of a display position of the comment for an image representing the document file on the basis of information which is input to the comment input region, wherein the input information is specific text information for designating the display position; and
performing control to display the comment at the designated display position of the image representing the document file.
